# EUROPÄISCHE PATENTSCHRIFT

(11) **EP 3 281 826 B1**
(45) Veröffentlichungstag und Bekanntmachung des Hinweises auf die Patenterteilung: **13.03.2019**
(21) Anmeldenummer: 17185551.3
(22) Anmeldetag: 09.08.2017
(51) Int. Cl.: B60R 3/00, B60P 3/08

(54) **ABSTURZSICHERUNG**
CRASH PROTECTION
DISPOSITIF DE PROTECTION CONTRE LES CHUTES

(30) Priorität: 12.08.2016 AT 507352016
(43) Veröffentlichungstag der Anmeldung: 14.02.2018
(73) Patentinhaber: Kässbohrer Transport Technik GmbH, 5301 Eugendorf (AT)
(72) Erfinder: EBERHARTINGER, Alexander, 5300 Hallwang (AT)
(74) Vertreter: Torggler & Hofinger Patentanwälte

(56) Entgegenhaltungen:
- WO-A1-2012/038992
- FR-A1- 2 962 953
- GB-A- 926 289
- US-A1- 2008 202 850

## Beschreibung

Die Erfindung betrifft eine Absturzsicherung mit den Merkmalen des Oberbegriffs des Anspruchs 1, einen Fahrzeugaufbau mit einer solchen Absturzsicherung und ein Fahrzeug mit einem solchen Fahrzeugaufbau.

Eine gattungsgemäße Absturzsicherung, ein gattungsgemäßer Fahrzeugaufbau und ein gattungsgemäßes Fahrzeug gehen aus der WO 2012/038992 A1 hervor.

Dort ist eine Absturzsicherung 5 für einen Ladebereich 3 eines Fahrzeugaufbaus gezeigt, mit wenigstens zwei sich in Montagelage vertikal erstreckenden Stützsäulen 13, die über Gelenke 21 um außerhalb der Stützsäulen 13 angeordnete vertikale Schwenkachsen zwischen einer ersten und einer zweiten Stellung verschwenkbar sind. Die Gelenke 21 weisen zu diesem Zweck eigene Übertragungsarme 19 auf, welche einerseits über Lagerstifte an einer seitlichen Kante 9 eines Fahrzeugaufbaus gelagert sind und andererseits über weitere Gelenke 23 an einem die Stützsäulen 13 starr verbindenden Basiselement 7 schwenkbar gelagert sind.

Eine weitere gattungsgemäße Absturzsicherung geht aus der FR 2962953 A1 hervor. Darin wird von einer Vielzahl an geradlinigen, gelenkig an einer Längsstruktur 11 gelagerten Stäben 5 eine Gehwegverbreiterung 1 ausgebildet, wobei die äußeren Enden 8 der Vielzahl an geradlinigen Stäben 5 über ein Verbindungselement 10 miteinander verbunden sind. Das Verbindungselement 10 weist Aufnahmen 30 für Stützsäulen 33 auf, welche zusammen mit Seilen 32 ein Geländer 15 ausbilden.

Problematisch ist bei dieser Konstruktion die Vielzahl an benötigten Bauteilen und die dadurch aufwändige und teure Herstellung und Wartung.

Aufgabe der Erfindung ist die Bereitstellung einer gattungsgemäßen Absturzsicherung, welche einfacher aufgebaut und einfacher herstellbar ist und eines gattungsgemäßen Fahrzeugaufbaus und eines gattungsgemäßen Fahrzeugs mit einer solchen Absturzsicherung.

Diese Aufgabe wird durch eine Absturzsicherung mit den Merkmalen des Anspruchs 1, einen Fahrzeugaufbau mit einer solchen Absturzsicherung und ein Fahrzeug mit einer solchen Absturzsicherung gelöst. Vorteilhafte Ausführungsformen der Erfindung sind in den abhängigen Ansprüchen definiert.

Weil vorgesehen ist, dass die wenigstens zwei Stützsäulen jeweils zwei über eine Kröpfung verbundene Abschnitte aufweisen und die vertikale Schwenkachse jeweils durch einen der beiden Abschnitte und parallel versetzt zum anderen der beiden Abschnitte verläuft, ergibt sich der Vorteil, dass keine gesonderten Übertragungsarme und damit verbundene Teile und Schwenklager erforderlich sind, sodass sich ein einfacher Aufbau ergibt. Die Absturzsicherung kann nachgerüstet werden. Ein Abschnitt einer Stützsäule kann in Montagelage im Wesentlichen zum Ladebereich hin gewandt verlaufen und der andere Abschnitt kann in Montagelage im Wesentlichen vom Ladebereich weg gerichtet verlaufen. Die erste Stellung kann einer Schwenkstellung entsprechen, in welcher sich die Stützsäulen in einer eingeschwenkten Stellung befinden. Dabei kann vorgesehen sein, dass in der ersten Schwenkstellung die Kröpfung und der in Montagelage im Wesentlichen vom Ladebereich weg gerichtet verlaufende Abschnitt der Stützsäulen innerhalb oder auch oberhalb des Ladebereichs angeordnet sind. Die zweite Stellung kann einer Schwenkstellung entsprechen, in welcher sich die Stützsäulen in einer ausgeschwenkten Stellung befinden. Dabei kann vorgesehen sein, dass in der zweiten Schwenkstellung zumindest Teile (Abschnitte) der Kröpfung und der in Montagelage im Wesentlichen vom Ladebereich weg gerichtet verlaufende Abschnitt der Stützsäulen außerhalb des Ladebereichs angeordnet sind. Bei Verwendung der Stützsäulen für einen Fahrzeugaufbau kann die erste Stellung einer für den Fahrbetrieb geeigneten Stellung (Verwahrstellung) entsprechen und die zweite Stellung einer zum Beladen des Ladebereichs des Fahrzeugaufbaus geeigneten Stellung (Beladestellung) entsprechen.

Vorteilhaft kann sein, dass die beiden Abschnitte und die Kröpfung der wenigstens zwei Stützsäulen einstückig gefertigt oder aneinander gefügt sind. Dadurch kann sich eine einfach herstellbare, gewichtssparende und wartungsarme Ausführung der Stützsäulen herstellen lassen.

Es kann vorgesehen sein, dass an den Stützsäulen ein Rahmen mit wenigstens einem ersten Rückhaltemittel angeordnet ist, wobei in einem an den Stützsäulen angeordneten Zustand des Rahmens das wenigstens eine erste Rückhaltemittel zwischen den wenigstens zwei Stützsäulen verläuft. Als Rahmen kann dabei ein beispielweise auf die Stützsäulen aufgesetzter Aufbau verstanden werden. Der Rahmen kann die Stützsäulen, beispielweise die vom Ladebereich weg weisenden Abschnitte der Stützsäulen, zumindest teilweise aufnehmen bzw. abdecken. Ein Rückhaltemittel kann der Sicherung einer sich auf dem Ladebereich befindenden oder bewegenden Person dienen.

Dabei kann vorgesehen sein, dass der Rahmen wenigstens zwei in Montagelage vertikal verlaufende Rahmenteile und wenigstens ein in Montagelage horizontal zwischen den wenigstens zwei vertikal verlaufenden Rahmenteilen angeordnetes, weiteres Rahmenteil aufweist, wobei vorzugsweise vorgesehen ist, dass das weitere Rahmenteil ein steifes Verbindungselement bildet. Die vertikal verlaufenden Rahmenteile können im Wesentlichen ringförmig, rohrförmig oder klammerartig - d.h. so, dass sie die Abschnitte der Stützsäulen teilweise umgreifen können - ausgebildet sein. Das weitere Rahmenteil kann einen profilierten Querschnitt aufweisen. Das weitere Rahmenteil kann auch ein Rückhaltemittel ausbilden.

Dabei kann weiter vorgesehen sein, dass die wenigstens zwei in Montagelage vertikal verlaufende Rahmenteile auf einen der beiden Abschnitte (42, 43) der wenigstens zwei Stützsäulen aufgesteckt sind und relativ zu den wenigstens zwei Stützsäulen um vertikal verlaufende Schwenkachsen, welche beispielsweise von den vom Ladebereich weg weisenden Abschnitten der Stützsäulen ausgebildet sind, drehbar sind. So kann gewährleistet werden, dass die vertikal verlaufenden Rahmenteile relativ zu den die Stützsäulen, beispielweise zu den vom Ladebereich weg weisenden Abschnitten der Stützsäulen, verschwenkbar gelagert sind. Dadurch kann erreicht werden, dass eine Schwenkbewegung einer der zumindest zwei Stützsäulen auf die zumindest eine weitere Stützsäule übertragen werden kann.

Es kann vorgesehen sein, dass das erste Rückhaltemittel als Vielzahl von Seilen oder als Plane ausgebildet ist. Dadurch lässt sich ein wirksames, gewichtssparendes und kostengünstiges Rückhaltemittel bereitstellen.

Weiter kann vorgesehen sein, dass zumindest ein die wenigstens zwei Stützsäulen verbindendes, steifes Verbindungselement vorgesehen ist, welches relativ zu den wenigstens zwei Stützsäulen um vertikal verlaufende Schwenkachsen schwenkbar gelagert ist. Als steifes Verbindungselement kann ein auf Zug und Schub belastbares Verbindungselement verstanden werden. Das steife Verbindungselement kann einen profilierten Querschnitt aufweisen und biegesteif ausgebildet sein. Durch ein steifes Verbindungselement kann erreicht werden, dass eine Schwenkbewegung einer der zumindest zwei Stützsäulen auf die zumindest eine weitere Stützsäule übertragbar ist.

Dabei kann vorgesehen sein, dass am horizontal verlaufenden, weiteren Rahmenteil ein horizontal verlaufendes, zweites Rückhaltemittel angeordnet ist. Ein solches zweites Rückhaltemittel kann flächig (stegförmig) ausgebildet sein und im Wesentlichen parallel zum Ladebereich verlaufen. So kann ein ausschwenkbares, begehbares Rückhaltemittel zur Verbreiterung der begehbaren Fläche eines Fahrzeugaufbaus bereitgestellt werden.

Es kann vorteilhaft sein, dass eine manuell auszulösende Betätigungsvorrichtung mit einer Totpunktmechanik zum Verschwenken der wenigstens zwei Stützsäulen zwischen der ersten und der zweiten Stellung vorgesehen ist. Eine solche Betätigungsvorrichtung kann ein Verschwenken der Stützsäulen zwischen einer ersten und einer zweiten Stellung (und umgekehrt) zumindest abschnittsweise unterstützen. Dabei kann weiter vorteilhaft sein, dass die Betätigungsvorrichtung zumindest einen Kraftspeicher, vorzugsweise eine Gasdruckfeder, aufweist, welcher über ein Ende mit dem Fahrzeugaufbau verbindbar ist und mit dem anderen Ende mit zumindest einer der wenigstens zwei Stützsäulen verbunden ist. Die Verbindung mit der Stützsäule erfolgt vorteilhafter Weise exzentrisch zur Schwenkachse der Stützsäule, beispielsweise durch eine Verbindung mit einem an einem der Abschnitte ausgebildeten bzw. angeordneten Vorsprung oder durch eine Verbindung am parallel zur Schwenkachse versetzten Abschnitt. Die Verbindung kann so ausgebildet sein, dass im Zuge eines Verschwenkens zwischen der ersten und der zweiten Stellung ein Totpunkt des Kraftspeichers überwunden wird.

Es kann weiter vorteilhaft sein, wenn eine Arretiervorrichtung zur Arretierung zumindest einer Stützsäule in zumindest einer Stellung vorgesehen ist. Die Arretiervorrichtung kann dabei mit dem Rahmen und zumindest einer Stützsäule und/oder mit zumindest einer Stützsäule und einem Fahrzeugaufbau zusammenwirken. Durch die Arretiervorrichtung kann allgemein die Absturzsicherung in einer eingeschwenkten und/oder ausgeschwenkten Stellung arretiert werden.

Wie bereits eingangs erwähnt wurde, wird auch Schutz für einen Fahrzeugaufbau mit zumindest einer wie zuvor beschriebenen Absturzsicherung begehrt.

Dabei kann vorteilhaft sein, dass die Absturzsicherung an einer Oberseite des Ladebereichs befestigt ist. Dadurch kann sich die Breite des Fahrzeugaufbaus mit eingeschwenkten, sich in der Verwahrstellung befindenden Stützsäulen der Absturzsicherung minimieren lassen. Auch können dadurch die Lagerstellen der Stützsäulen am Ladebereich angeordnet bzw. ausgebildet sein, wodurch eine Bearbeitung des Rahmens des Fahrzeugaufbaus entfallen kann.

Weiter kann vorteilhaft sein, dass an wenigstens einer Seite des Fahrzeugaufbaus zumindest zwei in Längsrichtung des Fahrzeugaufbaus hintereinander und versetzt zueinander angeordnete Absturzsicherungen angeordnet sind, deren Stützsäulen unabhängig voneinander zwischen der ersten und der zweiten Stellung verschwenkbar sind. Dies kann bei ausfahrbaren Verlängerungen oder Laderampen des Ladebereichs bzw. des Fahrzeugaufbaus von Vorteil sein. Der Versatz zwischen den Absturzsicherungen kann beispielweise durch eine verschachtelte Anordnung der Absturzsicherungen gegeben sein.

Wie bereits eingangs erwähnt wurde, wird auch Schutz für eine Fahrzeug mit einem wie zuvor beschriebenen Fahrzeugaufbau begehrt.

Ausführungsbeispiele der Erfindung werden anhand der Figuren diskutiert. Es zeigen:
- Fig. 1: eine perspektivische Ansicht eines Fahrzeugaufbaus mit mehreren Absturzsicherungen,
- Fig. 2a, 2b: eine Detailansicht einer Absturzsicherung in einer ersten und zweiten Schwenkstellung,
- Fig. 3a, 3b: eine Draufsicht auf einen Fahrzeugaufbau mit Absturzsicherungen in einer ersten und zweiten Stellung,
- Fig. 4a, 4b: Ansichten eines Fahrzeugaufbaus mit Absturzsicherungen in einer ersten und zweiten Stellung,
- Fig. 5a, 5b: eine perspektivische Ansicht eines Fahrzeugaufbaus mit Absturzsicherungen in einer ersten und zweiten Stellung,
- Fig. 6: eine perspektivische Ansicht einer weiteren Ausführung eines Fahrzeugaufbaus mit einer Absturzsicherung,
- Fig. 7: eine perspektivische Ansicht einer Ausführung einer Stützsäule,
- Fig. 8: eine Detailansicht eines Teils einer Absturzsicherung,
- Fig. 9: eine Detailansicht einer Absturzsicherung mit einer Arretiervorrichtung,
- Fig. 10: eine Detailansicht einer Absturzsicherung mit einem Kraftspeicher und
- Fig. 11: eine weitere Darstellung eines Teils einer Absturzsicherung.

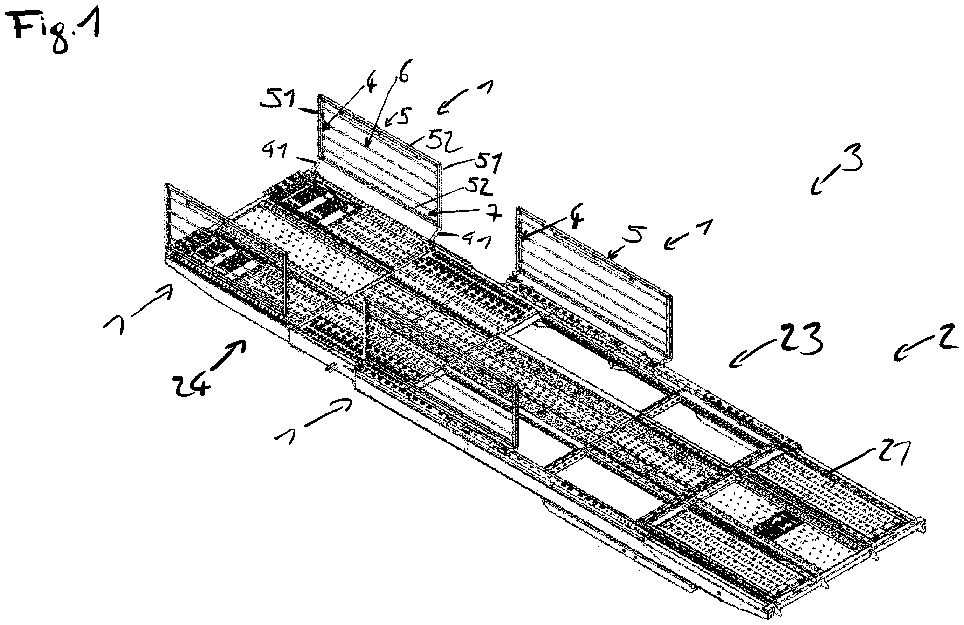

In Figur 1 ist eine erste Ausführung eines Fahrzeugaufbaus 3 mit einem von einem Lochblech 21 ausgebildeten Ladebereich 2 und in Längsrichtung des Fahrzeugaufbaus 3 hintereinander und versetzt zueinander angeordneten Absturzsicherungen 1 gezeigt. Die zwei sich in einem mittleren Bereich des Ladebereichs 2 befindenden Absturzsicherungen 1 befinden sich in einer ersten Stellung, welche einer Schwenkstellung der Stützsäule 4 entspricht, in welcher sich diese - und somit die Absturzsicherung 1 - in einer eingeschwenkten Stellung befindet. Die zwei sich in einem Endbereich des Ladebereichs 2 befindenden Absturzsicherungen befinden sich in einer zweiten Stellung, in welcher sich die Stützsäulen 4 in einer ausgeschwenkten Stellung befinden. Die Absturzsicherungen 1 weisen jeweils einen Rahmen 5 auf, welcher in der gezeigten Ausführung aus zwei horizontal verlaufenden Rahmenteilen 52 und zwei vertikal verlaufenden Rahmenteilen 51 aufgebaut ist. In der gezeigten Ausführung trägt der Rahmen 5 ein durch zwischen den vertikal verlaufenden Rahmenteilen 51 gespannte Seile ausgebildetes erstes Rückhaltemittel 6. Ein zweites Rückhaltemittel 7 kann von dem zum Ladebereich 2 benachbart angeordneten (unteren) horizontal verlaufenden Rahmenteil 52 ausgebildet werden. Durch ein Verschwenken der Absturzsicherung 1 aus der ersten in die zweite Stellung kann ein Ausschwenken der Absturzsicherung 1 quer zur Längserstreckung des Ladebereichs 2 - und somit eine Vergrößerung des Abstands zwischen zwei gegenüber angeordneten Absturzsicherungen 1 - erreicht werden. Der dabei mögliche seitliche Versatz ist dabei im Wesentlichen durch die Kröpfung 41 Stützsäulen 4 bestimmt.

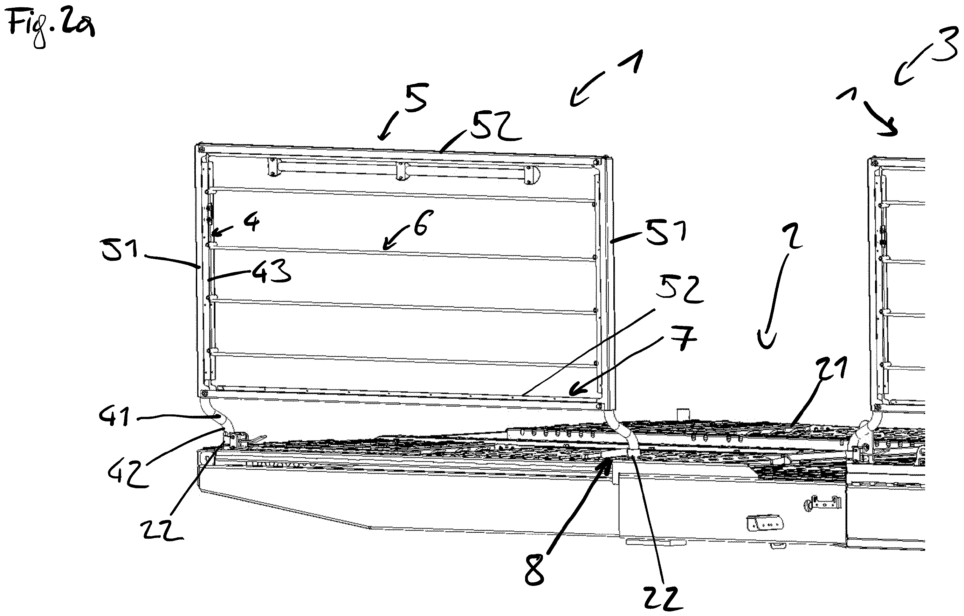

Figur 2a zeigt eine Detailansicht der im Endbereich des Ladebereichs 2 angeordneten Absturzsicherung 1. Dabei sind die in Montagelage vertikal verlaufenden Abschnitte 42, 43 der Stützsäule 4 sowie die den seitlichen Versatz bewirkende Kröpfung 41 erkennbar. Der Rahmen 5 ist auf die Stützsäulen 4 aufgesteckt und nimmt mit den vertikal verlaufenden, profilierten Rahmenteilen 51 die vertikal verlaufenden Abschnitte 43 der Stützsäulen 4 auf. Auch ist in Figur 2a der in dieser Ausführung als Gasdruckfeder ausgebildete Kraftspeicher 8 der Betätigungsvorrichtung gezeigt.

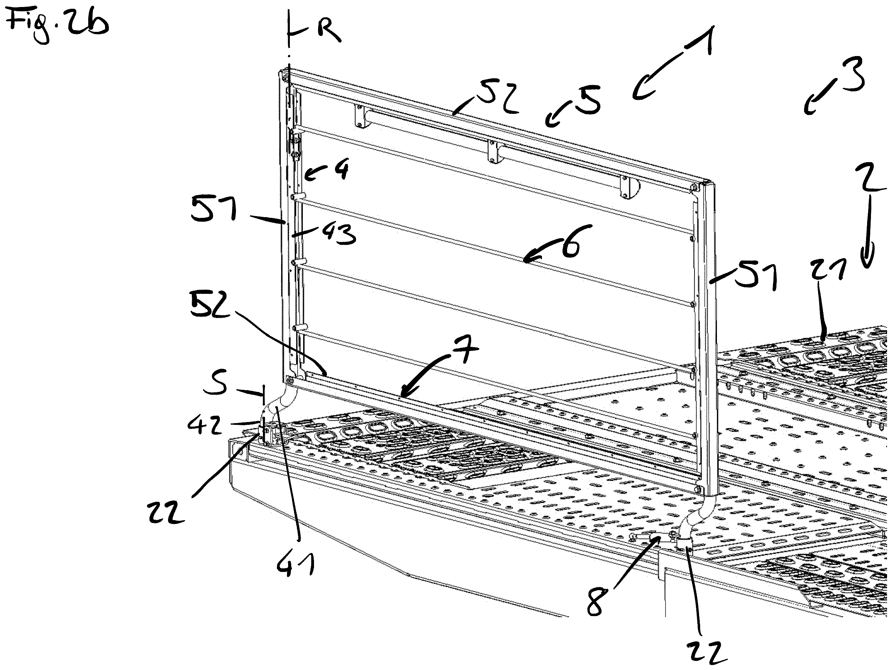

In Figur 2b befindet sich die Absturzsicherung 1 in der ersten, eingeschwenkten Stellung. Gegenüber der in der Figur 2a gezeigten Stellung sind die Stützsäulen 4 im Wesentlichen um 90° im Gegenuhrzeigersinn um die durch die in den Lager 22 aufgenommenen vertikalen Abschnitte 42 verlaufenden Schwenkachse S verschwenkt worden. Dadurch, dass der Rahmen 5 relativ zu den Stützsäulen 4 um die Schwenkachse R verschwenkbar ausgebildet ist, kann es durch ein Verschwenken der Stützsäulen 4 zu einem parallelen Versatz des Rahmens 5 und somit insgesamt zu einem Einschwenken der Absturzsicherung 1 kommen.

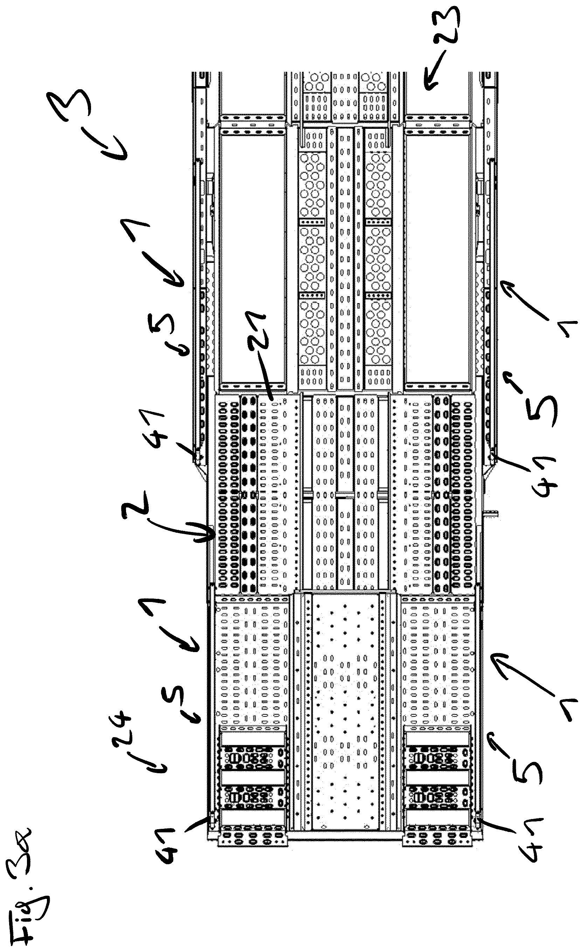

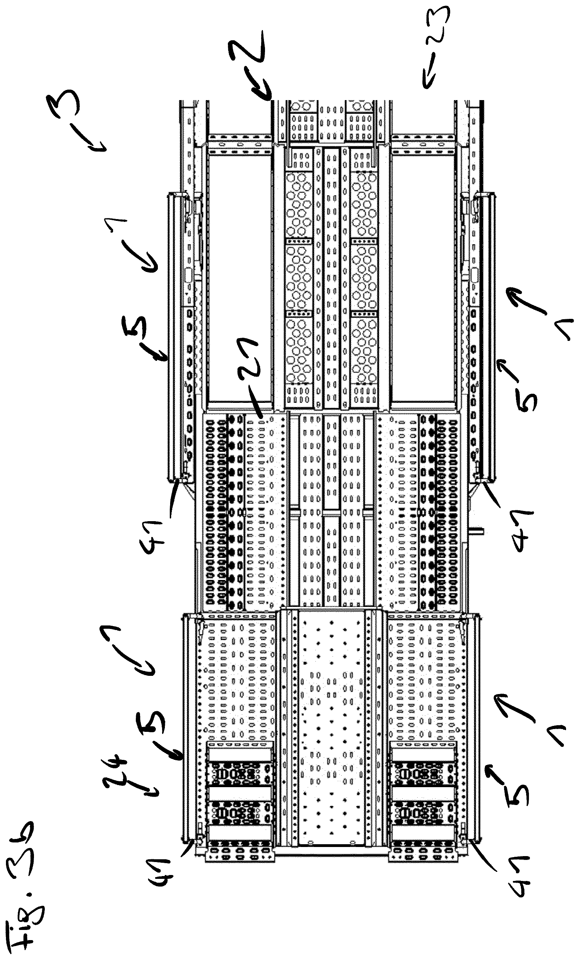

Figur 3a zeigt einen Fahrzeugaufbau 3 mit Absturzsicherungen 1, wobei die in einem Endbereich des Ladebereichs 2 angeordneten Absturzsicherungen 1 in Längsrichtung des Fahrzeugaufbaus 3 hintereinander und in Quererstreckung des Fahrzeugaufbaus 3 versetzt zueinander angeordnet sind. Ein Vergleich mit Figur 3b zeigt, dass durch eine solche versetzte Anordnung Absturzsicherungen 1 von verschiebbar ausgebildeten Teilen 23, 24 des Ladebereichs 2 ineinander verschachtelt angeordnet werden können. In Figur 3a befinden sich die Absturzsicherungen 1 jeweils in der ersten, eingeschwenkten Stellung. Die erste Stellung ist dadurch gekennzeichnet, dass sich die Absturzsicherung, also der Rahmen 5 sowie die Stützsäulen 4, im Wesentlichen vollständig oberhalb des Ladebereichs 2 befinden und somit nicht zur Außenbreite des Fahrzeugaufbaus 3 beitragen.

Im Gegensatz dazu befinden sich Absturzsicherungen 1 in Figur 3b in der zweiten Stellung, in welcher sich wie dargestellt der Rahmen 5 sowie Teile der Stützsäulen 4 der Absturzsicherungen 1 außerhalb des Ladebereichs 2 des Fahrzeugaufbaus 3 befinden. Dies kann beispielsweise bei einem mit Fahrzeugen beladenen Ladebereich 2 ein sicheres Begehen des Ladebereichs 2 ermöglichen, ohne dass dabei eine Behinderung durch die Absturzsicherung 1 entsteht.

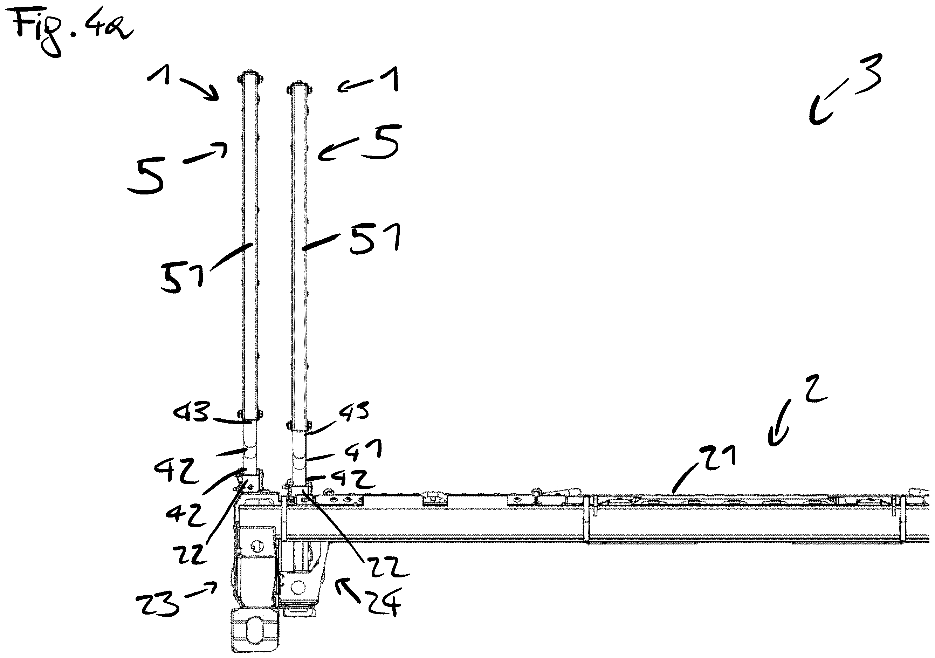

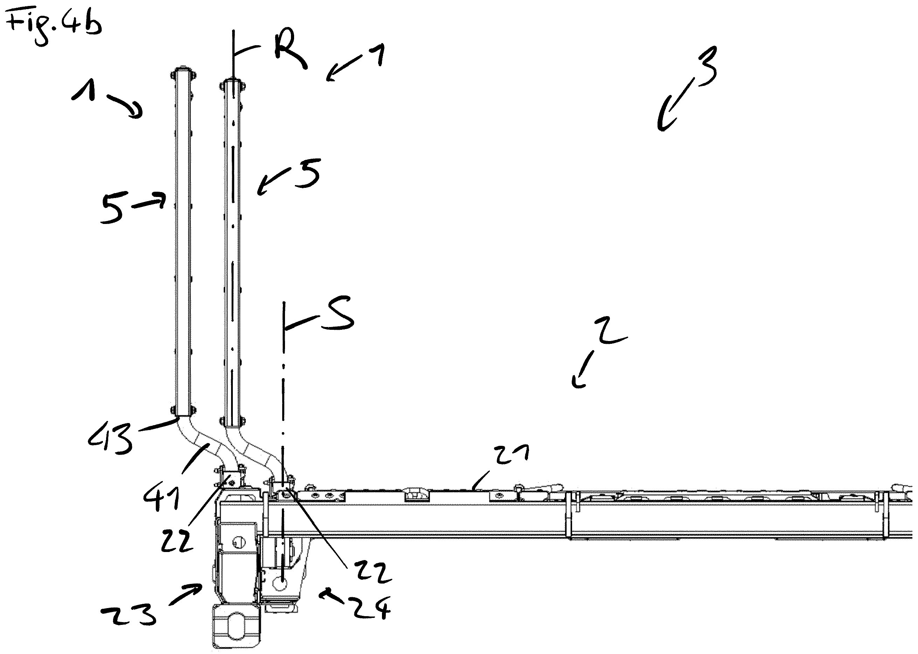

In Figur 4a und 4b sind zwei hintereinander und versetzt angeordnete Absturzsicherungen 1 dargestellt. In Figur 4a befinden sich die Absturzsicherungen in der ersten, eingeschwenkten Stellung. Die Stützsäulen 4 sind jeweils mit einem dem Ladebereich 2 zugewandten vertikal verlaufenden Abschnitt 42 in im Lochblech 21 angeordneten Lagern 22 gelagert und um eine durch diese vertikalen Abschnitte 42 verlaufende Schwenkachsen S verschwenkbar (siehe Figur 4b). Die Rahmen 5 sind relativ zu dem Ladebereich 2 abgewandten vertikalen Abschnitten 43 der Stützsäulen 4 um durch diese verlaufende vertikale Schwenkachsen R schwenkbar gelagert. Durch ein Verschwenken der Stützsäulen 4 zwischen der ersten und der zweiten Stellung kann ein horizontaler, paralleler Versatz, der auf die Stützsäulen 4 aufgesteckten Rahmen 5 erreicht werden. Durch eine auf Schub und Zug belastbare Ausbildung des Rahmens 5 kann ein Verschwenken einer Stützsäule 4 einer Absturzsicherung 1 auf die zumindest eine weitere Stützsäule 4 (der selben Absturzsicherung 1) übertragen werden.

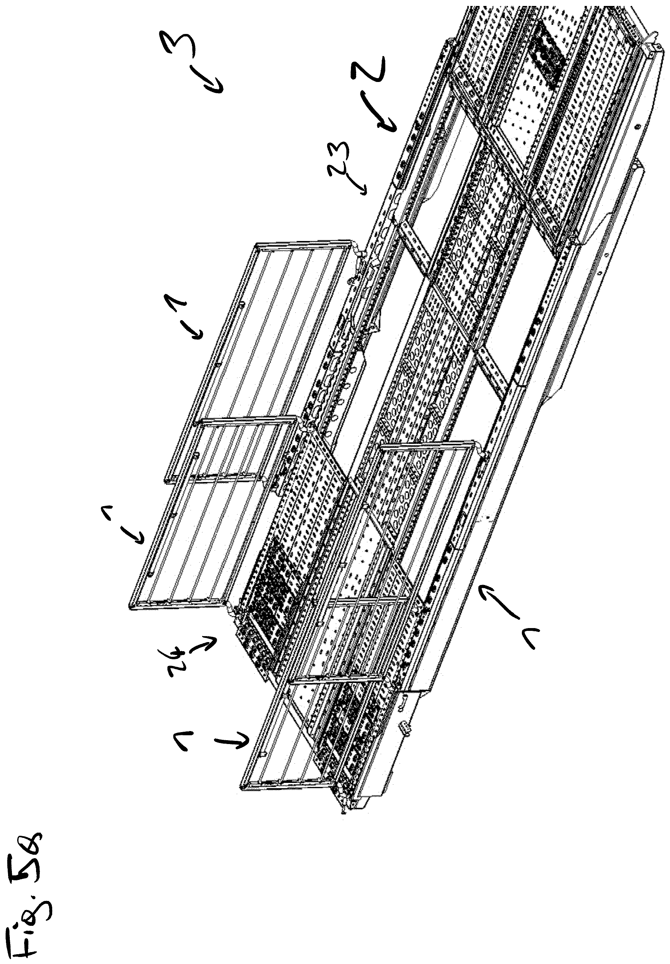

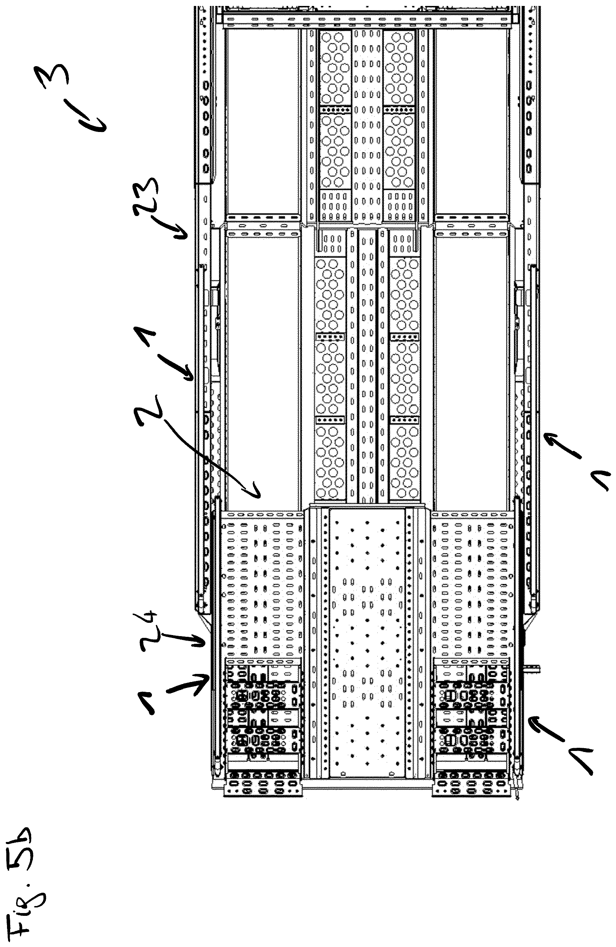

Figur 5a und 5b zeigen eine perspektivische Ansicht und eine Draufsicht eines Fahrzeugsaufbaus 3, bei welchem sich die zueinander verschiebbaren Bereiche 23, 24 des Ladebereichs 2 in einer teilweise eingefahrenen Stellung befinden. Die Absturzsicherungen 1 befinden sich in dieser teilweise eingefahrenen Stellung in einer verschachtelten Anordnung. Dies wird durch die in Längsrichtung des Fahrzeugaufbaus 3 hintereinander und in Quererstreckung des Fahrzeugaufbaus 3 zueinander versetzt erfolgende Anordnung der Absturzsicherungen 1 ermöglicht. Durch den in Quererstreckung des Fahrzeugaufbaus 3 versetzt erfolgende Anordnung der Absturzsicherungen 1, sowie auch durch die in vertikale Richtung leicht ansteigende Kröpfung 41, kann auch in dieser eingefahrenen Stellung der Bereiche 23, 24 des Ladebereichs 2 ein Verschwenken (Ausschwenken) der Absturzsicherungen 1 ermöglicht werden.

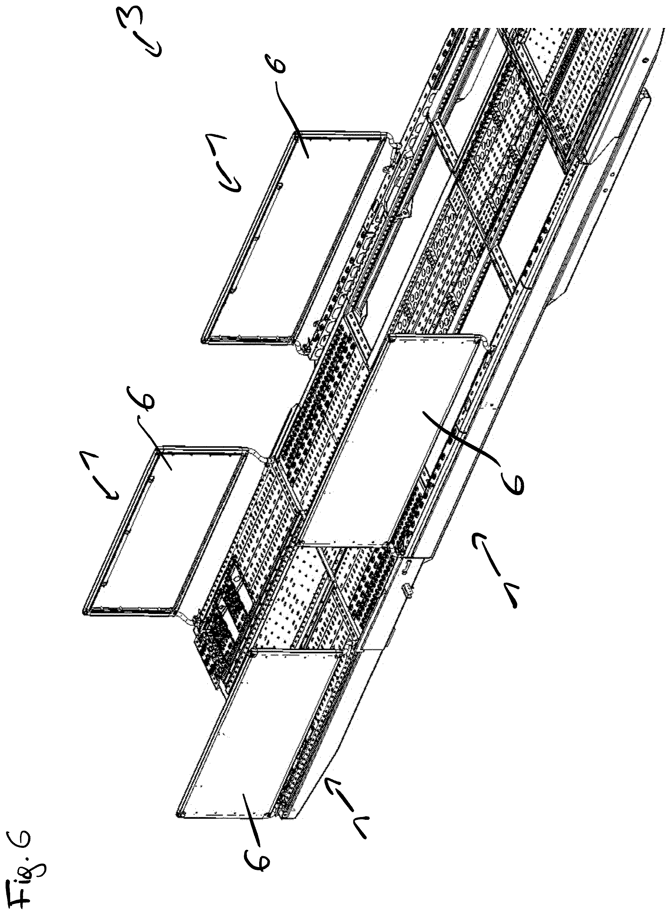

In Figur 6 ist eine Ausführung eines Fahrzeugaufbaus 3 mit einer Absturzsicherung 1 gezeigt, bei welcher das vom Rahmen 5 der Absturzsicherungen 1 getragene erste Rückhaltemittel 6 durch Planen ausgebildet ist.

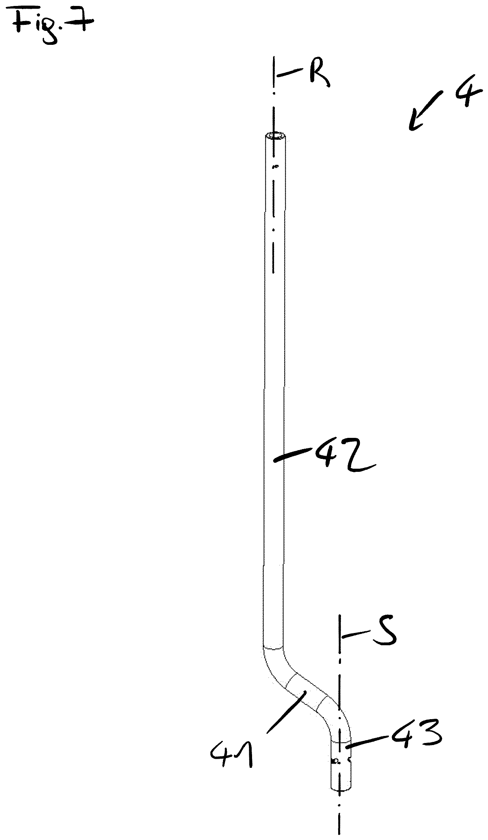

Figur 7 zeigt eine perspektivische Ansicht einer einzelnen Stützsäule 4. Dabei sind die im Wesentlichen parallel zueinander verlaufenden Abschnitte 42, 43 der Stützsäule 4 erkennbar. Die Abschnitte 42, 43 sind über die Kröpfung 41 miteinander verbunden. In der gezeigten Ausführung der Stützsäule 4 sind die beiden Abschnitte 42, 42 und die Kröpfung 41 einstückig ausgebildet. Eine solche einstückige Ausbildung einer Stützsäule 4 kann beispielsweise durch ein entsprechend gebogenes Rohr erfolgen. In einem montierten Zustand von Stützsäulen 4 ist vorgesehen, dass diese relativ zu einem Fahrzeugaufbau 3 um eine durch die Abschnitte 42 verlaufende Schwenkachse S verschwenkbar sind und ein auf die Abschnitte 43 aufgesetzter Rahmen 5 um durch die Abschnitte 43 verlaufende Schwenkachsen R verschwenkbar ist.

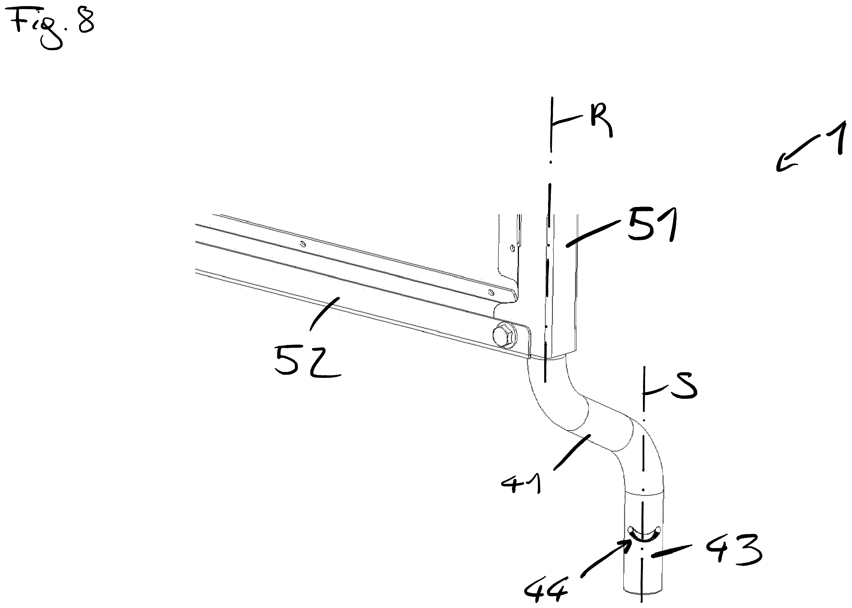

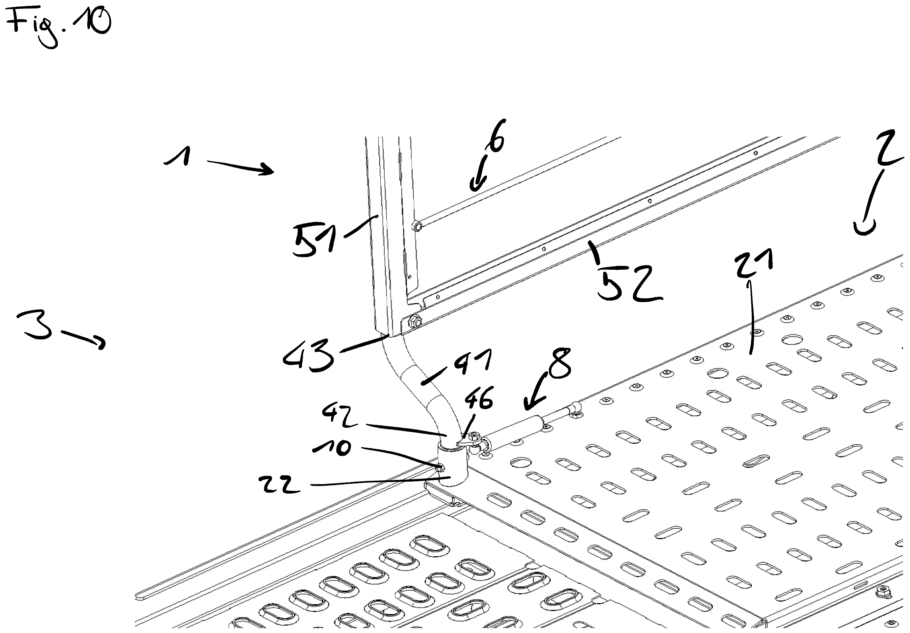

Figur 8 zeigte eine Detailansicht eines Teils einer Absturzsicherung 1, in welcher Teile der vertikal und horizontal verlaufenden Rahmenteile 51, 52 sowie Abschnitte der Stützsäule 4 gezeigt sind. Dabei ist zu erkennen, dass die Rahmenteile 51, 52 eine profilierten Querschnitt aufweisen. Weiter ist eine im Abschnitt 43 der Stützsäule 4 ausgebildete U-förmige Kulisse 44 gezeigt. In eingebautem Zustand der Stützsäule kann eine wie in Figur 10 gezeigte Schraube 10, welche drehfest zum Lager 22 angeordnet ist, in die Kulisse 44 hineinragen, sodass zwei Raststellungen für die Schwenkbewegung der Stützsäule 4 erreicht werden können, wobei diese Raststellungen der ersten und der zweiten Stellung entsprechen können.

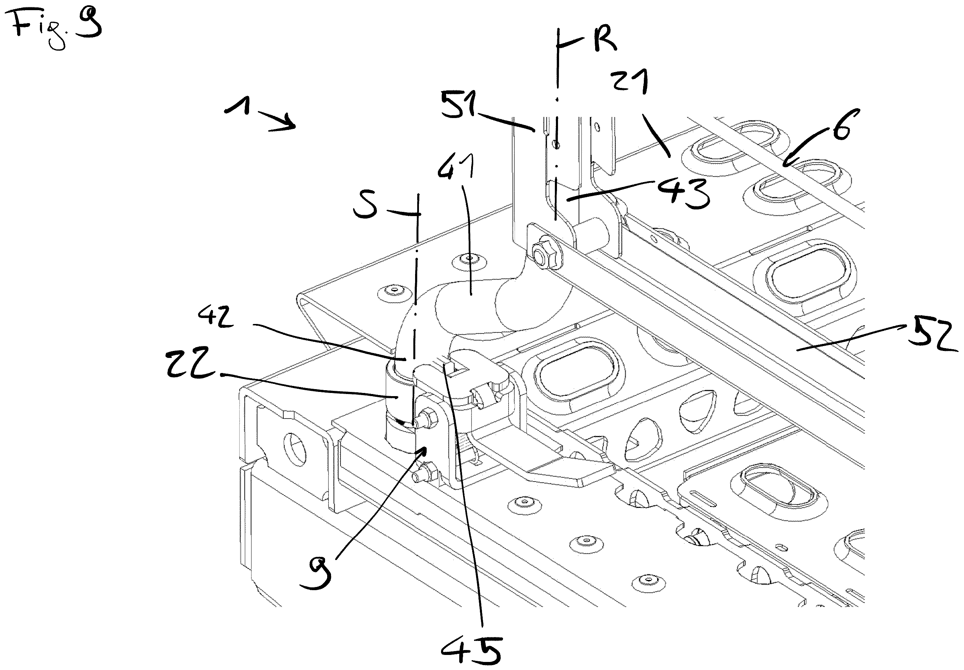

In Figur 9 ist eine Detailansicht eines Ausschnitts einer an einer Oberseite eines Ladebereichs 2 angeordneten Absturzsicherung 1 mit einer Arretiervorrichtung 9 gezeigt. Durch ein Eingreifen eines am Abschnitt 42 der Stützsäule 4 ausgebildeten Zapfens 45 in die Arretiervorrichtung 9 kann ein Verschwenken der zugehörigen Stützsäule 4 und somit der Absturzsicherung 1 verhindert werden. Dies kann beispielsweise bei einer Ausbildung des ersten Rückhaltemittels 6 als Plane (siehe Figur 6) vorteilhaft sein, da eine solche Ausbildung eine große Angriffsfläche für Wind bieten kann und durch die Arretiervorrichtung 9 ein ungewolltes Verschwenken der Stützsäulen 4 verhindert werden kann.

In der bereits angesprochenen Figur 10 ist weiter eine Ausbildung einer Betätigungsvorrichtung zum Verschwenken einer Stützsäule 4 zwischen der ersten und der zweiten Stellung gezeigt, wobei die Betätigungsvorrichtung einen Kraftspeicher 8 in Form einer Gasdruckfeder aufweist. Der Kraftspeicher 8 ist über ein Ende mit dem durch ein Lochblech 21 ausgebildeten Ladebereich 2 des Fahrzeugaufbaus 3 verbunden und mit dem anderen Ende mit einem am Abschnitt 42 der Stützsäule 4 ausgebildeten Fortsatz 46 verbunden. Durch die in Bezug auf den Abschnitt 42, durch welchen die wie in Figur 4b gezeigte Schwenkachse S verläuft, exzentrisch ausgebildete Verbindung des Kraftspeichers 8 mit dem Fortsatz 46 kann durch den Kraftspeicher 8 ein Drehmoment auf die Stützsäule 4 ausgeübt werden und dadurch ein Verschwenken der Stützsäule 4 zumindest abschnittsweise unterstützt werden. Bei einer geeigneten Anordnung der Verbindung des Kraftspeichers 8 mit dem Fahrzeugaufbau 3 und dem Fortsatz 46 kann eine einen Totpunkt aufweisende Betätigungsvorrichtung ausgebildet werden, durch welche die Absturzsicherung 1 - unterstützt vom Kraftspeicher 8 - auch in der jeweiligen Schwenkstellung gehalten werden kann.

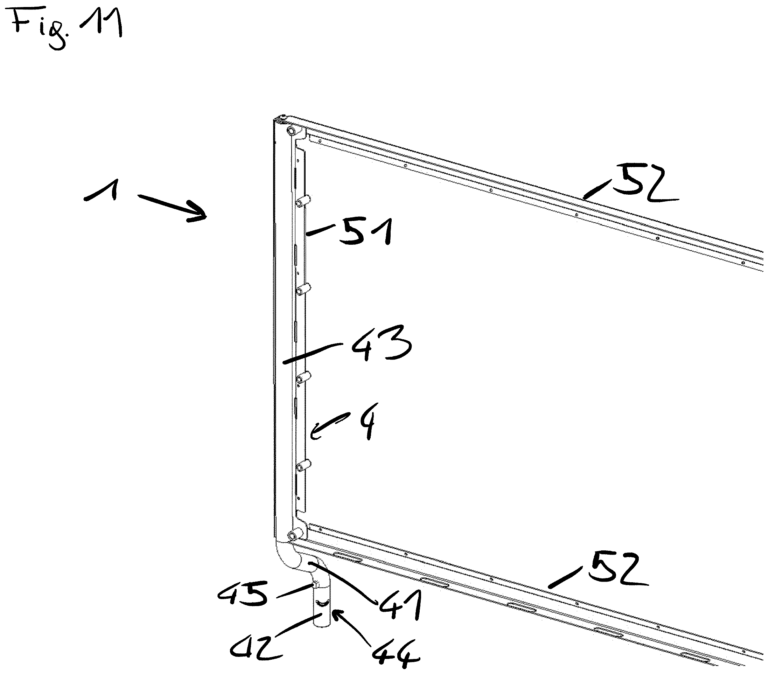

In Figur 11 ist ein Ausschnitt einer Schnittdarstellung durch eine Absturzsicherung 1 gezeigt, wobei die Schnittebene derart gelegen ist, dass Teile des Rahmens 5 ausgeblendet sind und der im vertikalen Rahmenteil 51 verlaufende Abschnitt 43 der Stützsäule 4 sichtbar ist. Wie in dieser Ausführung gezeigt, verläuft der Abschnitt 42 der Stützsäule über die gesamte Höhenerstreckung des vertikal verlaufenden Rahmenteils 51.

### Bezugszeichenliste:

- 1: Absturzsicherung
- 2: Ladebereich
21 Lochblech
22 Lager
23, 24 Bereiche
- 3: Fahrzeugaufbau
- 4: Stützsäule
41 Kröpfung der Stützsäule
42 Abschnitt der Stützsäule
43 Abschnitt der Stützsäule
44 Kulisse
45 Zapfen
46 Fortsatz
- 5: Rahmen
51 vertikal verlaufender Rahmenteil
52 horizontal verlaufender Rahmenteil
- 6: erstes Rückhaltemittel
- 7: zweites Rückhaltemittel
- 8: Kraftspeicher
- 9: Arretiervorrichtung
- 10: Schraube

- S: Schwenkachsen der Stützsäulen
- R: Schwenkachsen der vertikal verlaufenden Rahmenteile

## Patentansprüche

1. Absturzsicherung (1) für einen Ladebereich (2) eines Fahrzeugaufbaus (3), mit wenigstens zwei sich in Montagelage vertikal erstreckenden Stützsäulen (4), die über Gelenke um zumindest abschnittsweise außerhalb der Stützsäulen (4) angeordnete vertikale Schwenkachsen (S) zwischen einer ersten und einer zweiten Stellung verschwenkbar sind, **dadurch gekennzeichnet, dass** die wenigstens zwei Stützsäulen (4) jeweils zwei über eine Kröpfung (41) verbundene Abschnitte (42, 43) aufweisen und die vertikale Schwenkachse (S) jeweils durch einen der beiden Abschnitte (42, 43) und parallel versetzt zum anderen der beiden Abschnitte (42, 43) verläuft.

2. Absturzsicherung nach dem vorangehenden Anspruch, wobei die beiden Abschnitte (42, 43) und die Kröpfung (41) der wenigstens zwei Stützsäulen (4) einstückig gefertigt oder aneinander gefügt sind.

3. Absturzsicherung nach wenigstens einem der vorangehenden Ansprüche, wobei an den Stützsäulen (4) ein Rahmen (5) mit wenigstens einem ersten Rückhaltemittel (6) angeordnet ist, wobei in einem an den Stützsäulen (4) angeordneten Zustand des Rahmens (5) das wenigstens eine erste Rückhaltemittel (6) zwischen den wenigstens zwei Stützsäulen (4) verläuft.

4. Absturzsicherung nach dem vorangehenden Anspruch, wobei der Rahmen (5) wenigstens zwei in Montagelage vertikal verlaufende Rahmenteile (51) und wenigstens ein in Montagelage horizontal zwischen den wenigstens zwei vertikal verlaufenden Rahmenteilen (51) angeordnetes, weiteres Rahmenteil (52) aufweist, wobei vorzugsweise vorgesehen ist, dass das weitere Rahmenteil (52) ein steifes Verbindungselement bildet.

5. Absturzsicherung nach wenigstens einem der beiden vorangehenden Ansprüche, wobei die wenigstens zwei in Montagelage vertikal verlaufende Rahmenteile (51) auf einen der beiden Abschnitte (42, 43) der wenigstens zwei Stützsäulen (4) aufgesteckt sind und relativ zu den wenigstens zwei Stützsäulen (4) um vertikal verlaufende Schwenkachsen (R) drehbar sind.

6. Absturzsicherung nach wenigstens einem der Ansprüche 3 bis 5, wobei das erste Rückhaltemittel (6) als Vielzahl von Seilen oder als Plane ausgebildet ist.

7. Absturzsicherung nach wenigstens einem der vorangehenden Ansprüche, wobei zumindest ein die wenigstens zwei Stützsäulen (4) verbindendes, steifes Verbindungselement vorgesehen ist, welches relativ zu den wenigstens zwei Stützsäulen (4) um vertikal verlaufende Schwenkachsen (R) schwenkbar gelagert ist.

8. Absturzsicherung nach wenigstens einem der Ansprüche 4 bis 7, wobei am horizontal verlaufenden, weiteren Rahmenteil (52) ein horizontal verlaufendes, zweites Rückhaltemittel (7) angeordnet ist.

9. Absturzsicherung nach wenigstens einem der vorangehenden Ansprüche, wobei eine manuell auszulösende Betätigungsvorrichtung mit einer Totpunktmechanik zum Verschwenken der wenigstens zwei Stützsäulen (4) zwischen der ersten und der zweiten Stellung vorgesehen ist, wobei die Betätigungsvorrichtung zumindest einen Kraftspeicher (8), vorzugsweise eine Gasdruckfeder, aufweist, welcher über ein Ende mit dem Fahrzeugaufbau (3) verbindbar ist und mit dem anderen Ende mit zumindest einer der wenigstens zwei Stützsäulen (4) verbunden ist, wobei im Zuge eines Verschwenkens zwischen der ersten und der zweiten Stellung ein Totpunkt des Kraftspeichers (8) überwunden wird.

10. Absturzsicherung nach wenigstens einem der vorangehenden Ansprüche, wobei eine Arretiervorrichtung (9) zur Arretierung zumindest einer Stützsäule (4) in zumindest einer Stellung vorgesehen ist.

11. Fahrzeugaufbau (3) mit zumindest einer Absturzsicherung (1) nach wenigstens einem der vorangehenden Ansprüche.

12. Fahrzeugaufbau nach dem vorangehenden Anspruch, wobei die Absturzsicherung (1) an einer Oberseite des Ladebereichs (2) befestigt ist.

13. Fahrzeugaufbau nach wenigstens einem der beiden vorangehenden Ansprüche, wobei an wenigstens einer Seite des Fahrzeugaufbaus (3) zumindest zwei in Längsrichtung des Fahrzeugaufbaus (3) hintereinander und versetzt zueinander angeordnete Absturzsicherungen (1) nach wenigstens einem der vorangehenden Ansprüche 1 bis 10 angeordnet sind, deren Stützsäulen (4) unabhängig voneinander zwischen der ersten und der zweiten Stellung verschwenkbar sind.

14. Fahrzeug mit einem Fahrzeugaufbau nach wenigstens einem der Ansprüche 11 bis 13.

## Claims

1. A fall protection arrangement (1) for a load area (2) of a vehicle structure (3), comprising at least two support columns (4) which extend vertically in a mounted position and which are pivotable between a first and a second position by way of joints around vertical pivot axes (S) arranged at least portion-wise outside the support columns (4), **characterised in that** the at least two support columns (4) each have two portions (42, 43) connected by way of an offset configuration (41) and the vertical pivot axis (S) respectively extends through one of the two portions (42, 43) and in displaced parallel relationship with the other of the two portions (42, 43).

2. A fall protection arrangement according to the preceding claim wherein the two portions (42, 43) and the offset configuration (41) of the at least two support columns (4) are made in one piece or are joined together.

3. A fall protection arrangement device according to at least one of the preceding claims wherein a frame (5) having at least one first retaining means (6) is arranged on the support columns (4), wherein in a state of the frame (5) arranged on the support columns (4) the at least one first retaining means (6) extends between the at least two support columns (4).

4. A fall protection arrangement according to the preceding claim wherein the frame (5) has at least two frame parts (51) which extend vertically in a mounted position and at least one further frame part (52) extending horizontally in a mounted position between the at least two vertically extending frame parts (51), wherein it is preferably provided that the further frame part (52) forms a rigid connecting element.

5. A fall protection arrangement according to at least one of the two preceding claims wherein the at least two frame parts (51) extending vertically in the mounted position are fitted on one of the two portions (42, 43) of the at least two support columns (4) and are rotatable relative to the at least two support columns (4) about vertically extending pivot axes (R).

6. A fall protection arrangement according to at least one of claims 3 to 5 wherein the first retaining means (6) is in the form of a plurality of ropes or in the form of a tarpaulin.

7. A fall protection arrangement according to at least one of the preceding claims wherein there is provided at least one rigid connecting element which connects the at least two support columns (4) and which is mounted pivotably relative to the at least two support columns (4) about vertically extending pivot axes (R).

8. A fall protection arrangement according to at least one of claims 4 to 7 wherein a horizontally extending second retaining means (7) is arranged on the horizontally extending further frame part (52).

9. A fall protection arrangement according to at least one of the preceding claims wherein there is provided an actuating device to be triggered manually having a dead centre mechanism for pivoting the at least two support columns (4) between the first and the second positions, wherein the actuating device has at least one force storage means (8), preferably a gas spring, which can be connected by way of one end to the vehicle structure (3) and is connected with the other end to at least one of the at least two support columns (4), wherein a dead centre of the force storage means (8) is surpassed in the course of a pivotal movement between the first and the second position.

10. A fall protection arrangement according to at least one of the preceding claims wherein there is provided an arresting device (9) for arresting at least one support column (4) in at least one position.

11. A vehicle structure (3) comprising at least one fall protection arrangement (1) according to at least one of the preceding claims.

12. A vehicle structure according to the preceding claim wherein the fall protection arrangement (1) is fixed to a top side of the load area (2).

13. A vehicle structure according to at least one of the two preceding claims wherein arranged at at least one side of the vehicle structure (3) are at least two fall protection arrangements (1) according to at least one of preceding claims 1 to 10, the fall protection arrangements being arranged in succession and in mutually displaced relationship in the longitudinal direction of the vehicle structure (3), the support columns (4) thereof being pivotable independently of each other between the first and the second positions.

14. A vehicle comprising a vehicle structure according to at least one of claims 11 to 13.

## Revendications

1. Dispositif de protection contre les chutes (1) pour une zone de chargement (2) d'une carrosserie de véhicule (3), comprenant au moins deux colonnes d'appui (4) qui s'étendent verticalement dans une position de montage et qui peuvent pivoter par l'intermédiaire d'articulations entre une première et une deuxième position autour d'axes de pivotement (S) verticaux agencés au moins en sections à l'extérieur des colonnes d'appui (4), **caractérisé en ce que** les au moins deux colonnes d'appui (4) présentent chacune deux parties (42, 43) reliées par un coude (41) et l'axe de pivotement vertical (S) s'étend respectivement à travers une des deux parties (42, 43) et parallèlement en décalage de l'autre des deux parties (42, 43).

2. Dispositif de protection contre les chutes selon la revendication précédente, dans lequel les deux parties (42, 43) et le coude (41) des au moins deux colonnes d'appui (4) sont fabriqués d'une seule pièce ou joints les uns aux autres.

3. Dispositif de protection contre les chutes selon au moins l'une des revendications précédentes, dans lequel un cadre (5) pourvu d'au moins un premier moyen de retenue (6) est agencé sur les colonnes d'appui (4), dans lequel, une fois le cadre (5) agencé sur les colonnes d'appui (4), le au moins un premier moyen de retenue (6) s'étend entre les au moins deux colonnes d'appui (4).

4. Dispositif de protection contre les chutes selon la revendication précédente, dans lequel le cadre (5) présente au moins deux parties de cadre (51) s'étendant verticalement dans une position de montage et au moins une autre partie de cadre (52) agencée dans une position de montage horizontalement entre les au moins deux parties de cadre (51) s'étendant verticalement, dans lequel il est prévu de préférence que l'autre partie de cadre (52) forme un élément de liaison rigide.

5. Dispositif de protection contre les chutes selon au moins l'une des deux revendications précédentes, dans lequel les au moins deux parties de cadre (51) s'étendant verticalement dans la position de montage sont emboîtées sur une des deux parties (42, 43) des au moins deux colonnes d'appui (4) et peuvent être amenées en rotation autour d'axes de pivotement (R) s'étendant verticalement par rapport aux au moins deux colonnes d'appui (4).

6. Dispositif de protection contre les chutes selon au moins l'une des revendications 3 à 5, dans lequel le premier moyen de retenue (6) est réalisé sous la forme d'une pluralité de câbles ou sous la forme d'une bâche.

7. Dispositif de protection contre les chutes selon au moins l'une des revendications précédentes, dans lequel au moins un élément de liaison rigide reliant les au moins deux colonnes d'appui (4) est monté de manière à pouvoir pivoter autour d'axes de pivotement (R) s'étendant verticalement par rapport aux au moins deux colonnes d'appui (4).

8. Dispositif de protection contre les chutes selon au moins l'une des revendications 4 à 7, dans lequel un deuxième moyen de retenue (7) s'étendant horizontalement est agencé sur l'autre partie de cadre (52) s'étendant horizontalement.

9. Dispositif de protection contre les chutes selon au moins l'une des revendications précédentes, dans lequel un dispositif d'actionnement à déclenchement manuel pourvu d'un mécanisme de point mort est destiné à faire pivoter les au moins deux colonnes d'appui (4) entre la première et la deuxième position, dans lequel le dispositif d'actionnement présente au moins un accumulateur de force (8), de préférence un ressort de compression à gaz, lequel peut être relié par une extrémité à la carrosserie du véhicule (3) et est relié par l'autre extrémité à au moins une des au moins deux colonnes d'appui (4), dans lequel un point mort de l'accumulateur de force (8) est surmonté au cours d'un pivotement entre la première et la deuxième position.

10. Dispositif de protection contre les chutes selon au moins l'une des revendications précédentes, dans lequel un dispositif de blocage (9) est destiné à bloquer au moins une colonne d'appui (4) dans au moins une position.

11. Carrosserie de véhicule (3) comprenant au moins un dispositif de protection contre les chutes (1) selon au moins l'une des revendications précédentes.

12. Carrosserie de véhicule selon la revendication précédente, dans lequel le dispositif de protection contre les chutes (1) est fixé à une face supérieure de la zone de chargement (2).

13. Carrosserie de véhicule selon au moins l'une des deux revendications précédentes, dans lequel au moins deux dispositifs de protection contre les chutes (1) selon au moins l'une des revendications précédentes 1 à 10 agencés l'un derrière l'autre dans la direction longitudinale de la carrosserie de véhicule (3) et décalés l'un de l'autre, dont les colonnes d'appui (4) peuvent pivoter indépendamment l'une de l'autre entre la première et la deuxième position, sont agencés sur au moins une face de la carrosserie de véhicule (3).

14. Véhicule comprenant une carrosserie de véhicule selon au moins l'une des revendications 11 à 13.
